# EUROPEAN PATENT SPECIFICATION

(11) **EP 4 163 444 B1**
(45) Date of publication and mention of the grant of the patent: **10.09.2025**
(21) Application number: 22200435.0
(22) Date of filing: 07.10.2022
(51) Int. Cl.: E02F 5/00, F16L 1/16

(54) **VIBRATION DEVICE, SYSTEM, ARRANGEMENT AND METHOD FOR OFFSHORE DE-BURIAL OF A TUBULAR STRUCTURE**
VIBRATIONSVORRICHTUNG, SYSTEM, ANORDNUNG UND VERFAHREN ZUR OFFSHORE-AUSGRABUNG EINER RÖHRENFÖRMIGEN STRUKTUR
DISPOSITIF DE VIBRATION, SYSTÈME, AGENCEMENT ET PROCÉDÉ POUR LE DÉCALAMINAGE EN MER D'UNE STRUCTURE TUBULAIRE

(30) Priority: 08.10.2021 NL 2029363
(43) Date of publication of application: 12.04.2023
(73) Proprietor: Enersea B.V., 3115 JA Schiedam (NL)
(72) Inventor: KORNDÖRFFER, Dieter, 3115 JA Schiedam (NL)
(74) Representative: V.O.

(56) References cited:
- WO-A1-2004/072529
- WO-A1-2019/081938
- KR-A- 20140 135 335
- US-A1- 2018 115 141

## Description

### FIELD

The invention relates to the offshore de-burial of a tubular structure such as a pipeline or a cable or an umbilical. In particular, the invention relates to a device and a system for offshore de-burial of a pipeline or a cable, an arrangement of said system and a soil buried pipeline or cable, and a method for de-burying a soil buried pipeline or cable offshore.

### BACKGROUND

Pipelines or cables are often buried beneath the seabed. Burying pipelines or cables has advantages during the service-life of the pipeline or the cable. Pipelines or cables are often buried for means of protection and/or to comply with legislation. A pipeline or a cable can be buried on a depth of about 1 m to as deep as 6 meters below the seabed.

However, once the pipeline or cable is decommissioned, the buried state of the pipeline or cable provides some disadvantages. The owner or operator of the pipeline or cable can, in some occasions, leave the pipeline or cable buried, or may opt for de-burying of the pipeline or cable. When the decommissioned pipeline or cable remains buried, regular, at least yearly, inspection of the pipeline or cable is needed. This is however costly and time consuming. De-burying the pipeline or the cable on the other hand is cumbersome, costly, requires heavy equipment and is energy consuming.

The de-burial of a pipeline or cable is usually done in a manner comparable to how the pipeline or cable was initially buried. As such, conventional de-burying methods comprise using digging equipment to remove a layer of soil covering the buried pipeline or cable, after which the pipeline or cable can be removed. However, during decommissioning the challenge arises that now the exact position of the buried pipeline/cable is hard to be determined, but the position is required to be able to effectively remove only the soil on top of the pipeline/cable. The use of such digging equipment, such as drills, ploughs, or waterjet cutters is very expensive and requires a lot of time and effort. Often the costs for de-burying the pipeline or cable to not outweigh the costs for maintaining them buried, so usually, buried pipelines or cables are left buried. However, also when buried, the pipeline or cable can be for example blocking routes of new pipelines or cables. And in other cases, legislation requires the pipeline or cable to be removed.

As such, there is a need for a device and/or a method which renders the de-burial of a pipeline or cable into a more feasible operation. In particular, a device and/or method is envisaged to de-bury a pipeline or a cable more cost effectively, more efficiently and/or less time consuming.

US2018115141 discloses a system comprising a physical process applicator; and a first coupler configured to attach to a first end of a first cable, wherein the physical process applicator is configured to apply a physical process, via the first coupler, to the first cable; and tension, via the first coupler, the first cable, wherein the first coupler is configured to cause, via the physical process, the first cable to displace at least some ground material surrounding the first cable, and wherein the first coupler is further configured to allow at least part of the first cable to be removed.

### SUMMARY

According to an aspect there is provided a vibration device for offshore de-burial of a pipeline or a cable, wherein the vibration device has a contact surface for being in contact with a wall of the pipeline or the cable, wherein the vibration device comprises at least one vibration unit arranged to induce vibration in a direction transversely to the contact surface.

Due the vibration device being in contact with a wall of the pipeline or the cable, the vibration induced by the vibration unit will be transferred to the pipeline or the cable. The vibration will travel through the pipeline or the cable. A part of the pipeline or the cable which is buried in, initially undisturbed, intact, soil will start to vibrate. Through this vibration, energy will be induced into the undisturbed or intact soil, causing the strength and/or stiffness of the soil to be reduced, e.g. the soil around the pipeline or the cable may even become liquefied. The part of the pipeline or the cable, now surrounded by the weaker or liquefied soil, can easily be pulled out of the liquid soil, thus de-burying this part of the pipeline or the cable. Advantageously, the soil surrounding the pipeline or the cable is reduced in strength and/or stiffness, sometimes even liquefied, via the vibrations of the pipeline or the cable. This is contrary to some prior art methods, that may use trilling needles protruding in the soil to weaken the soil. Here, the strength and/or stiffness of the soil is weakened via the pipeline or cable itself. Also, the vibration of the pipeline or the cable provides for weakening of the soil surrounding it over an axial length of, or a range along, the pipeline or the cable. Over the length along which the soil is reduced in strength and/or stiffness, the pipeline or cable can be pulled out of the soil without the need of removing the soil above the pipeline or cable.

Inducing vibration in a direction transversely to the contact surface i.e. in a radial direction of the pipeline or the cable, may optimize the range of the reduction of the strength and/or stiffness of the solid soil. Vibrations in radial direction of the pipeline or cable are beneficial for transferring the vibrations to the soil, and thus to weaken the soil surrounding the pipeline or the cable. As such enough soil can be weakened such that the buried pipeline or cable can be pulled out of the layer of weakened soil. This as opposed to inducing vibration in a longitudinal direction of the pipeline or cable. With vibrations induced in the longitudinal direction of the pipeline or cable it may be difficult to set the pipeline or cable sufficiently in vibration to transfer the vibrations to the soil surround it until the strength of the soil is sufficiently weakened. In particular when the pipeline or cable is deeply buried, inducing vibrations in longitudinal direction may not be effective.

The at least one vibration unit of the vibration device can be mounted to the pipeline or cable, to directly induce vibrations to the pipeline or cable. Alternatively, the at least one vibration unit of the vibration device may be arranged remotely from the pipeline or cable, with the contact surface contacting the pipeline or cable. Then, a connection between the vibration unit and the contact surface is provided to transmit the vibrations of the vibration unit to the contact surface. For example, the vibration unit may be provided on the deck of the vessel recovering the pipeline or cable, while a connector may transmit the vibrations to the contact surface.

The vibration device for offshore de-burial of a pipeline or a cable, wherein the vibration device may comprise at least one vibration unit and a support pipe that is configured to be mounted over the pipeline or cable or inside the pipeline, wherein the at least one vibration unit is arranged to induce vibrations in a direction transversely to a wall of the support pipe to weaken the soil around the support pipe or the pipeline or the cable.

The at least one vibration unit may be mounted to or being integrated to a support pipe, when a support pipe is used. Advantageously, vibrations are then induced in a direction transversely to the support pipe, in particular transversely to a wall of the support pipe, so transversely to a longitudinal direction of the support pipe. When the support pipe is mounted over the pipeline or cable, vibrations are advantageously induced in the support pipe forming the outer side of the buried pipeline or cable. Advantageously, the vibrations are induced in the structure that is most outwardly and is in contact with the soil of the seabed in which the pipeline or cable is buried. For example, if no support pipe is used, then the pipeline or cable itself are in contact with the soil, then the vibrations are preferably induced in transverse direction in the pipeline or cable itself to weaken or even liquefy the soil around the buried pipeline or cable. If a support pipe is used that is mounted over the pipeline or cable, then the support pipe is in contact with the soil of the seabed in which the pipeline or cable is buried. Then, advantageously, vibrations are induced in the support pipe to weaken or even liquefy the soil of the seabed in which the pipeline or cable are buried. When the support pipe is provided inside of the pipeline, then the vibrations are advantageously induced in transverse direction into the pipeline itself to weaken the soil around the pipeline, the pipeline being in contact with the soil.

Throughout this disclosure, the terms "pipeline" and "cable" are used. It shall be appreciated that the teachings of the disclosure can be applied to any kind of elongated structure to be de-buried. The terms pipeline and cable only aim to differ between a cylindrical structure with a substantially hollow interior and a cylindrical structure with a substantially solid interior. Examples, but not limiting, of pipelines can be oil pipelines, gas pipelines, etc. Examples, not limiting, of cables can be optical cables, data cables, umbilicals, power cables, etc.

Throughout this disclosure, the term "liquefy" is used. The term "liquefy" is used to indicate that the strength and/or stiffness of the soil is sufficiently weakened such that a pipeline or cable can easily be pulled through the soil due to the reduced soil resistance. It shall therefore be understood that the soil does not have to be in a fully liquefied state in order to achieve this effect. It may suffice to weaken the soil up to a certain extent wherein the soil is not yet liquefied.

Advantageously, in an offshore environment a vessel is used to support the de-burial operations. The vibration device may for example be operated from such a vessel, and/or the pipeline or cable to be removed may be pulled in on such a vessel.

Alternatively or additionally, the contact surface may be a convex contact surface or a concave contact surface. A convex contact surface allows the vibration device to be in contact with an inner wall of a tubular buried structure, which is more appropriate in the case of a buried pipeline, but may be less appropriate in the case of a buried cable. A convex contact surface allows the vibration device to be in contact with an outer wall of a tubular buried structure, which can be appropriate for both of a pipeline or a cable. When the contact surface of the vibration device is in contact with a wall of the pipeline or the cable, the vibrations induced by the vibration device, are directly transferred to the pipeline or the cable, and as such, the pipeline or the cable can be put in vibration. Advantageously, the contact surface may arranged to be in contact with a wall of the pipeline or the cable over the entire circumference of the wall of the pipeline or the cable. By being in contact with the wall over its entire circumference, the vibration can be brought to the entire surface of the wall that is in contact with the contact surface. As such, a more firm engagement can be achieved between the vibration device and the wall of the pipeline or the cable, which results in vibration being transferred to the wall with a higher efficiency.

The at least one vibration unit may be configured to be mounted to an outer side of the pipeline of the cable, wherein a contact surface of the vibration unit may be arranged to engage an outer wall of the pipeline or the cable. Alternatively, the vibration unit may be configured to be mounted inside of the pipeline, wherein a contact surface of the vibration unit is arranged to engage an inner wall of the pipeline. When the pipeline has a sufficiently large diameter to receive the vibration unit, the vibration unit can be positioned inside of the pipeline. Typically, a cable may not be hollow, so the vibration unit advantageously is positioned at an outside of the cable, such that the contact surface is in contact with the outer wall of the cable. When inducing vibrations transversely to the contact surface, and when the contact surface is engaged to the outer wall or the inner wall, vibrations are induced in radial direction of the pipeline or the cable. Advantageously, the contact surface has a shape corresponding to the shape of the outer wall or inner wall, and preferably has a length such that, in engagement with the outer wall or the inner wall, the contact surface is in contact with a corresponding axial length of the pipeline or the cable. Further, the contact surface may extend over a part of the circumference of the outer wall or the inner wall, or may even extend over the entire circumference, to maximize contact with the engaged wall surface, and thus to optimize the transfer of the vibrations. A vibration unit may comprise one or more contact surfaces that may contact the pipeline or the cable or the support pipe when a support pipe is used.

Alternatively or additionally, the vibration unit may comprise a casing, wherein the casing may be arranged to transfer the vibration to the contact surface. Advantageously, the casing may be provided with the contact surface. Casings of different sizes may be provided to adapt to pipelines or cables with different sizes. The casing may furthermore protect the vibration unit from conditions under sea water. By providing a casing, a robust construction of the vibration unit can be obtained.

Alternatively or additionally, the at least one vibration unit may comprise a vibration source to induce the vibration. The vibration source may for example be at least one eccentric mass for inducing vibrations and/or at least one hydraulic cylinder-, and/or at least one electrically driven cylinder and/or at least one pneumatic cylinder for inducing vibrations. Advantageously, the vibration source can be provided inside of the casing. The casing may thus protect the vibration source, which may increase the lifetime of the vibration source. Also, by providing the casing, the vibration source does not need to be in contact directly with the pipeline and/or the cable, but induces the vibration to the casing, and via the casing to the pipeline or cable, providing for a more robust construction.

Alternatively or additionally, the contact surface may comprise a layer of lubrication and/or a low friction material. By providing a layer of lubrication and/or a low friction material, the contact surface may easily be translated along a wall of the pipeline or cable with which the contact surface is in contact, allowing more easy pulling of the pipeline or the cable along the contact surface. Alternatively or additionally, the contact surface may comprise rollers or sliders.

Alternatively or additionally, the vibration device may further comprise a support pipe. Advantageously wherein the support pipe may have a support pipe end arranged to be connected to the at least one vibration unit. The pipeline or the cable is buried at a certain depth beneath the seabed level. On, for example, the deck of a ship, a de-buried and retrieved part of the pipeline or the cable can be further processed, which further processing will be discussed more in detail below. A portion of the pipeline or the cable may be in between the still buried part of the pipeline or the cable and the deck of the ship. The position where the pipeline or the cable leaves the soil and is suspended is called the sag bend. In case of a cable, the support pipe can be arranged to be mounted around the cable. In case of a pipeline, the support pipe may be arranged to be mounted into the pipeline. Additionally, in the case of a pipeline, the support pipe may be arranged to prevent buckling at the sag bend of the portion of the pipeline in which the support pipe is mounted. The support pipe may protect any feed lines or feed cables to the vibration unit and/or may provide for some strength to the pipeline or the cable, e.g. to prevent or reduce buckling during pulling-in of part of the pipeline or cable out of the liquefied soil.

Advantageously, the support pipe may have a predetermined length. The predetermined length can be such that the support pipe may extend substantially up to the sag bend, such that the position of the vibration unit is at or near the sag bend of the pipeline or the cable. By positioning the contact surface of the vibration unit at or near the bend, the transfer of vibration into the soil can be optimized for soil strength reduction at a most effective location. The support pipe may achieve this by being connected to a vessel at one end of the support pipe while being connected to the vibration unit at the other end of the support pipe. Thus, a predetermined length can be maintained between the vibration unit, which can be near or at the buried part of the pipeline, and, here, the vessel. So, when pulling in a part of the pipeline or the cable onto the vessel, the distance between the vibration unit and the vessel remains the same predetermined length of the support pipe, and the vibration unit moves along the pipeline or the cable during pulling in, while the vessel moves as well.

The at least one vibration unit may be coupled to the support pipe, e.g. at an end thereof, or at a position of the support pipe in between both ends. The at least one vibration unit may be mounted to the support pipe such that it induces vibrations in the support pipe in a transverse direction with respect of a wall of the support pipe. Alternatively, or additionally, the at least one vibration unit may be mounted to the support pipe, at an inner side when the support pipe is inside of the pipeline, while the support pipe is then provided with a contact surface at an opposite side, i.e. the outer side when the vibration unit is mounted to the inner side, to contact the pipeline or cable respectively. Then, the vibrations induced by the at least one vibration unit are transmitted via the support pipe to the pipeline or cable. Alternatively or additionally, the at least one vibration unit may be integrated into the support pipe, e.g. into a wall of the support pipe, and as such may induce vibrations in transverse direction into the wall of the support pipe. The at least one vibration unit may be integrated to the wall of the support pipe, at an inside or at an outside thereof, thereby facilitating handling of the support pipe with vibration units as a single equipment.

In an example, a jetting system may be provided additionally, wherein the jetting system can be used to emit water to the soil around the buried pipeline or cable, to aid loosening the soil. The vibration device may thus further comprise a jetting system arranged to emit a jet of water to loosen or remove soil directly above or around the pipeline or cable. The jetting system may be used to remove the soil in addition to the vibration induced by the vibration device, to increase the recovery speed. As such, only limited capacity for the jetting system is needed, and a relatively small jetting system can be used, in particular compared to conventional jetting systems that are solely used to liquefy the soil. The jetting system may be sufficient to only reduce the stiffness of the soil a few centimeters around the pipeline or cable, and is supportive to the vibration device. For example, the jetting system may be used to remove the soil after the soil has been liquefied by the vibration device. Thus, the removal of the pipeline or cable can become easier, and the recovery speed can increase. Alternatively, the jetting system can be used simultaneously with the vibration device to reduce the time required for liquefying the soil.

Alternatively or additionally, the vibration device may comprise a plurality of vibration units. By providing a plurality of vibration units, a larger axial length of the surrounding soil around the pipeline or the cable can be weakened, thus the part of the pipeline or the cable that can be pulled in when the surrounding soil is sufficiently weakened can be larger, so the entire de-burying operation can be less time consuming. Such plurality of vibration units may be mounted at a distance from each other along the pipeline or cable, or, when a support pipe is used, along the support pipe. Multiple vibrations units may be engaged to the support pipe at a distance from each other. It has been shown that the vibrations induced transversely to the pipeline or cable by a single vibration unit may have an impact in axial direction along the pipeline or cable between about 2 m to about 25 m towards each side. So, a distance between adjacent vibration units of 5 m up to 20 m may allow the soil around the pipeline or cable to sufficiently weaken or even liquefy to pull the pipeline or cable onboard the vessel. So, with a limited number of vibration units a relatively large axial length of the pipeline or cable can be covered of which the soil can be weakened by the vibrations induced by the vibration units in a direction transversely of the pipeline or cable. For example, by providing three, four or five subsequent vibration units with a distance between 5 m to 20 m between each other, a significant length of the pipeline or cable can be loosened and pulled in. Such a length of the pipeline or cable may be 50 m to 100 m or even more. This may allow for a relative swift process to loosen the soil around the pipeline or cable and to pull the loosened pipeline or cable on the vessel. Such a process may be significantly faster than a conventional process of cutting segments of the pipeline while in or on the seabed, and then lifting the cut segments. Further, by providing multiple vibration units, it may be that not all vibration units are vibrating in the same phase and/or frequency and/or amplitude. It may be that some vibration units may vibrate differently, e.g. in a different phase and/or at a different frequency and/or at a different amplitude. Differences in vibrations between the multiple vibration units may be used to control and/or adapt the vibrations induced in the associated wall of a pipeline or cable or support pipe.According to an aspect of the invention, there is provided a system for offshore de-burial of a pipeline or a cable, comprising a vibration device according to any of the preceding claims to weaken a soil in which the pipeline or the cable is buried and further comprising a pulling unit arranged to pull the pipeline or the cable at least partially out of the weakened, or even liquefied, soil. In the system, the pulling unit is provided at a distance from the at least one vibration unit of the vibration device. For example, the pulling unit can be mounted onto the deck of the vessel, while the at least one vibration unit may be engaged to the pipeline or cable at seabed level, or at any position in between seabed level and vessel.

Alternatively or additionally, the system may further comprise a cutting unit to cut a part of the pipeline or the cable that is pulled out of the soil. Cutting a part of the pipeline or the cable, preferably of the part of the pipeline or the cable that is pulled-in on the deck of a vessel, may be easier to, for example, store the pulled-in parts of the pipeline or the cable on the vessel. As such, a reel may be obviated on which the pulled-in cable may have to be stored. Of course, instead of cutting, the de-buried pipeline or cable may be stored on a reel on the vessel. Cutting the pipeline or the cable may increase a length of the pipeline or cable which may be de-buried during a single sail of the vessel. Advantageously, the cutting unit may comprise a cutting edge to cut a part of the pipeline or the cable in longitudinal direction thereof.

Advantageously, cutting part of the pipeline or cable is done in longitudinal direction. The cutting unit thus makes cuts along a longitudinal, being an axial, direction of the pipeline or cable. In an example, the recovered pipeline or cable can be cut in sections, i.e. making a cut in transverse direction. The cutting unit may make, also at least one, preferably at least two cuts in longitudinal direction, as to provide for shell parts of the pipeline or cable. Such shell parts, or segments of a wall section, can then be more easily and/or more compact stored onto the vessel. However, it is also possible to wind the recovered pipeline onto a reel or a carrousel, then cutting the recovered pipeline in sections is not necessary. The pipeline may nevertheless receive longitudinal cuts, forming segments, which segments may be wound onto a reel or a carrousel.

Cutting of parts of the pipeline or the cable may facilitate further processing of the pipeline or the cable on the deck. Cut parts of a pipeline may for example form relatively short pieces which can be stacked in a more compact manner than tubular parts of a pipeline. In the case of a buried cable, it may be easier to transport a load of cut pieces of cable or in a carousel than to wind the de-buried cable on a reel and transporting the reel of de-buried cable. The cutting unit may be arranged downstream of the pulling unit. As such the cutting unit does not cut a part of the cable or pipeline which is under tension due to being pulled by the pulling unit. In this disclosure, downstream is understood to refer to a position more downwardly along the pipeline or cable when seen from the pipeline or cable at seabed level. For example, seen from the pipeline or cable at a position where it is buried in the seabed, the sag bend where the pipeline or cable surfaces from the seabed is more downstream. Further downstream, the pipeline or cable goes upward towards the vessel, at which the pulling unit is located. In the example that the at least one vibration unit is mounted to the pipeline or cable where buried, then the pulling unit at the vessel is more downstream of the vibration unit, said differently, in that example the vibration unit is more upstream located of the pulling unit.

Alternatively or additionally, the system may further comprise a frame, wherein the frame is configured to receive at least one of a pulling unit and a cutting unit. Advantageously, the frame may be arranged to be mounted on a deck of a vessel. The frame provides for a central component to which a plurality of other components may be mounted. The frame furthermore may be arranged to form a connection with, for example, a platform, a ship, or a barge. The system may be manufactured on or around the frame. This also facilitates the replacement of the de-burial system from one vessel to another, as this may be reduced to unmounting the frame from a first vessel and remounting the frame to a second vessel. The frame may also allow relatively easy lifting and/or transport of the pulling unit and/or the cutting mounted, which can be mounted to that frame. Also, the frame can be fastened to the deck of the vessel, instead of fastening each of the pulling unit and cutting unit itself independently to the deck of the vessel.

Optionally, the at least one vibration unit may be arranged to be mounted to the pipeline or the cable near or at a vessel, for example the at least one vibration unit may be engaged to the pipeline or the cable at the deck of the vessel, upstream of the pulling unit. As such, the transverse vibrations are induced into the pipeline or the cable above the water level, and may be transported to the part of the pipeline or the cable that is buried. In some circumstances, the distance between the at least one vibration unit on deck and the buried part of the pipeline or the cable may be sufficient to allow the vibration unit to induce vibrations that can weaken the strength and the stiffness of the soil surrounding the buried part of the pipeline or the cable. Such a configuration may be beneficial, because all equipment can stay above the water level onboard of the vessel.

Alternatively or additionally the at least one vibration unit may be at a distance from the pulling unit. For example, the at least one vibration unit may be arranged to engage the pipeline or the cable near or at a position where the pipeline or the cable leaves the soil. In this case, the support pipe may be arranged between the at least one vibration unit and the pulling unit to maintain the distance between the at least one vibration unit and the pulling unit during operation. Furthermore, the support pipe of the vibration device may be arranged to extend between the vessel and the at least one vibration unit mounted to the pipeline or the cable.

According to an aspect of the invention, there is provided an arrangement of a system as described hereinabove and a soil buried pipeline or cable, and a vessel, wherein the vibration device is mounted or engaged to the pipeline or the cable, and the pulling unit and/or the cutting unit are mounted to the vessel.

Alternatively, or additionally, the vibration device may be mounted to the pipeline or the cable near or at a position where the pipeline or the cable leaves the soil. Alternatively, the vibration device may be mounted to an end of the pipeline or cable at the vessel.

According to an aspect of the invention there is provided a method for de-burying a soil buried pipeline or a cable offshore, the method comprising a) exposing a part of the pipeline or the cable from the soil in which it is buried, b) mounting the vibration device of the de-burial system to a part of the pipeline or the cable, c) inducing vibrations in transverse direction of the pipeline or the cable to the pipeline or the cable respectively until the soil around the pipeline or the cable is weakened, preferably liquefied, d) pulling the pipeline or the cable from the weakened, preferably liquefied soil, e) moving the vibration device to a next part of the pipeline or the cable and re-iterate steps c) - d). Advantageously, step d) and step e) may be performed simultaneously, or step c), step d) and step e) may be performed simultaneously.

The method may additionally comprise the step of cutting a part of the pipeline or the cable which is pulled from the liquefied soil, wherein the step of cutting is performed after step d) or after step e).The method may further comprise the step of cutting a part of the pipeline or the cable which is pulled from the liquefied soil, wherein the step of cutting is performed after step d) or after step e). The step of cutting the pipeline or cable may comprise cutting a section of the pipeline or cable by making a transverse cut, and/or may comprise cutting a segment of the pipeline or cable or of the section of the pipeline or cable by making at least one longitudinal cut.

Alternatively or additionally, the at least one vibration unit of the vibration device may be mounted below a water line to the pipeline or the cable at or near the position where the pipeline or the cable leaves the soil. In this case, the support pipe of the vibration device may optionally be mounted between the vibration unit below the water line and the pulling unit on the vessel such that the distance between the vibration unit and the pulling unit is kept constant during de-burying.

### BRIEF DESCRIPTION OF THE FIGURES

The invention will be further explained on the basis of an exemplary embodiment which is represented in a drawing. The drawing show in the figures is as follows.
Fig. 1 shows a schematic cross section of a vibration device for offshore de-burial of a soil buried pipeline,
Fig. 2 shows a system for offshore de-burial of a soil buried pipeline,
Fig. 3 shows a detail of a system for offshore de-burial of a soil buried pipeline,
Fig. 4 shows a detail of a system for offshore de-burial of a soil buried cable,
Fig. 5 shows a detail of a system for offshore de-burial of a soil-buried pipeline,
Fig. 6 shows a flowchart of a method for de-burying a soil buried pipeline or a cable offshore;
Fig. 7 shows a general arrangement of a buried pipeline or cable being removed with a system according to the invention;
Fig. 8 shows an arrangement of the system with the pipeline or cable in a C-configuration;
Fig. 9 shows the C-configuration arrangement of figure 8 with a first position of the at least one vibration unit and a second position of the at least one vibration unit.

### DETAILED DESCRIPTION OF THE FIGURES

It is noted that the Figures are only schematic representations of exemplary embodiments of the invention, and are not to scale. Like parts are designated with like reference numerals.

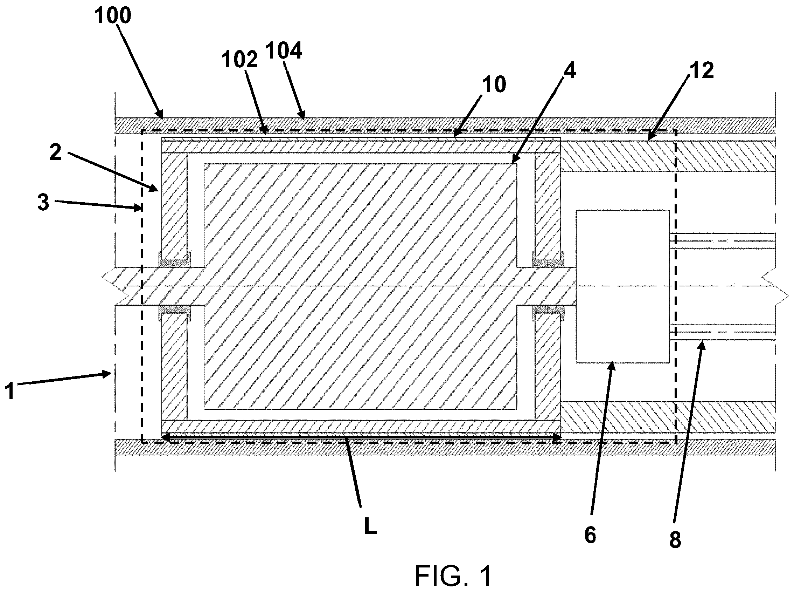

Fig. 1 shows a schematic cross section of a vibration device 1 for offshore de-burial of a pipeline 100. The vibration device 1 comprises a vibration unit 3 comprising a casing 2 which is mounted to an inner wall 102 of the pipeline 100. The vibration unit 3 further comprises a vibration source 4, here an eccentric mass 4, which is rotatably mounted inside the casing 2 and a motor 6 which drives the eccentric mass 4. Power is provided to the motor 6 by cables 8. The eccentric mass 4, when rotating, induces vibration into the casing 2. The casing 2 transfers the vibration to the pipeline 100 through the contact surface 10 formed between the casing 2 and the inner wall 102 of the pipeline 100. The vibration then travels through the pipeline 100, dispersing vibrational energy into the soil in which the pipeline 100 is buried. This causes the soil around the part of the pipeline 100 wherein the casing 2 is mounted to liquefy. After a sufficient amount of soil has been liquefied, this part of pipeline 100 can be pulled out of the soil. The part of the pipeline 100 is pulled out of the soil in a radial direction of the pipeline 100, usually in an upwards direction. Due the length of the pipeline 100, it is not possible to liquefy the soil around the pipeline 100 along the entirety of the pipeline 100. As such, it is not possible to pull the pipeline 100 transversely out of the soil by pulling in a longitudinal direction of the pipeline 100.

In order to pull a part of the pipeline 100 in an upwards direction, it is feasible that a relatively thick layer of soil is liquefied above the part of the pipeline 100. To achieve this, vibration is induced in a direction transversely to the contact surface 10, i.e. in a radial direction of the pipeline 100. By applying the vibration in the radial direction of the pipeline 100, the vibrational energy will be dispersed more locally into the soil near the vibration device 1. As such, a relatively thick layer of soil is liquefied above the pipeline 100, albeit only along a relatively short portion of the pipeline 100. In comparison, applying the vibration in a longitudinal direction of the pipeline 100 would result in soil being liquefied along a relatively long portion of the pipeline 100, but only a relatively thin layer would be liquefied above the pipeline 100.

It is noted that the vibration transferred through a pipeline or a cable and into the soil does not necessarily have to liquefy the entire thickness layer of soil covering a pipeline or a cable. It can be sufficient that a substantial part of the layer is liquefied, after which the pipeline or the cable may be pulled upwards through the liquefied part of the soil. Then, the next, higher up part of the layer may be liquefied, and the pipeline or the cable may again be pulled upwards to the newly liquefied part of the soil. This process can be repeated until a part of the pipeline or the cable is completely de-buried. It shall be noted that this can be a continuous process, wherein a part of the pipeline or the cable is continuously pulled upwards while the vibration device is continuously inducing vibration.

The contact surface 10, as shown in Fig. 1, is in contact with the entire circumference of the inner wall 102, at least along a predetermined axial length L of the inner wall 102. Being in contact with the entire circumference of the inner wall 102 has the advantage that the vibration induced in the casing 2 does not cause the inner wall 102 to be pushed away from the contact surface 10. As such, a more firm connection can be achieved between the vibration device and the wall of the pipeline or the cable, which results in vibration being transferred to the wall with a higher efficiency. In other embodiments, however, the contact surface might not be in contact over the entire circumference of a wall of a pipeline or a cable. For example, if a pipeline has an elliptical cross section instead of a circular cross section, a circular casing may still be used. The casing will then only be in contact with a wall of the pipeline along a part of the entire circumference of the wall. Nevertheless, casings in different sizes and shapes may be provided, such that the vibration device can be adapted to the shape of a specific pipeline or cable.

The contact surface 10 can comprises a layer of lubrication and/or a low friction material. Both of the lubrication or low friction material aim to reduce the friction between the casing 2 and the inner wall 102. As such, the casing 2 can easily be moved inside the pipeline 102. As an alternative or addition to the layer of lubrication and/or low friction material, the casing may comprise rollers or sliders. These rollers and or/sliders may comprise the contact surface.

The vibration device 1 further comprises a support pipe 12. The support pipe 12, as shown on Fig. 1, is connected to the casing 2. The support pipe 12 and the functionality thereof shall be discussed more in detail later on.

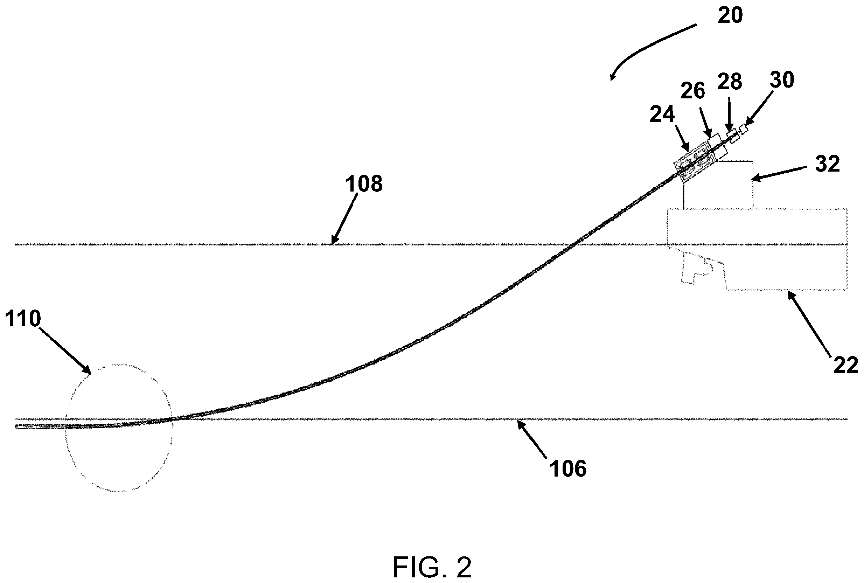

Fig. 2 shows a system 20 for offshore de-burial of a soil buried pipeline. A seabed 106 and a sea level 108 are shown, and the pipeline 100 which is partly buried underneath the sea bed 106. One end of the pipeline 100 is connected to the system 20.

It is noted that in order to connect an end of the pipeline to the system, this end has to be de-buried first. This may require conventional digging equipment for de-burying an end of the pipeline, such as drills, ploughs, or waterjet cutters. After a conventional de-burying of an end of the pipeline, this end of the pipeline may be connected to the system 1, which may result in the view as shown in Fig. 1 Another situation may arise if the pipeline already has a surfacing portion, for example near the shore. In this case, the surfacing portion may simple be connected to the system 1 in order to commence de-burying the pipeline or at least a part of the pipeline.

The system 20 comprises the vibration device 1 as shown in Fig. 1, wherein the vibration unit 3 of the vibration device 1 is mounted inside the pipeline 100. Fig. 2 shows that the vibration unit 3 is mounted inside the pipeline 100 near the position 110 where the pipeline 100 leaves the seabed 106. This position is also known as the sag bend 110 of the pipeline 100. By mounting the vibration unit 3 near the sag bend 110, the distance over which induced vibration has to travel between the vibration source 4 and the soil to be liquefied can be minimized. As such the efficiency of soil-liquefication can be increased. Nevertheless, in another example, the vibration unit 3 can be mounted to the pipeline 100 near the end of the pipeline 100 which is connected to a vessel 22 of the system 20. Providing the vibration unit 3 at the vessel 22 incites that the vibration unit 3 does not need to be designed for underwater circumstances.

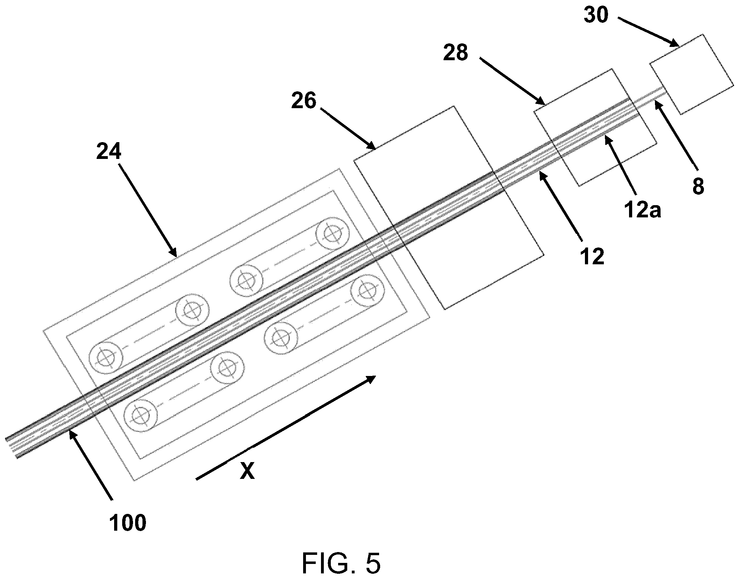

The system 20 further comprises a pulling unit 24, which receives the end of pipeline 100. The pulling unit 24 is arranged to pull the pipeline 100 at least partly out of the seabed 106. Downstream of the pulling unit 24, a cutting unit 26 is provided. The cutting unit 26 is arranged to cut the pipeline 100. The pulling unit 24 and the cutting unit 26 will be discussed more in detail, and are shown more in detail, in reference to Fig. 5. Remaining at Fig. 2, downstream of the cutting unit 26, a support block 28 is provided. The support block 28 is arranged to support the support pipe 12, which extends between the support block 28 and the vibration unit 3. Downstream of the support block 28, a drive unit 30 is provided. The drive unit 30, in this example provides electrical power to the vibration unit 3 through the cables 8. Each of the pulling unit 24, cutting unit 26, support block 28 and drive unit 30 are mounted to a frame 32. The frame 32 provides for a central frame to which every of the aforementioned components can be mounted. The frame 32 itself is mounted to the vessel 22. The support pipe 12 serves several functions. The support pipe 12 has a predetermined length, assuring that the distance between the support block 28 and the vibration unit 3 remains the same. Furthermore, the support pipe 12 prevents buckling of the de-buried part of the pipeline 100. The support pipe 12 also provides protection to the cables 8.

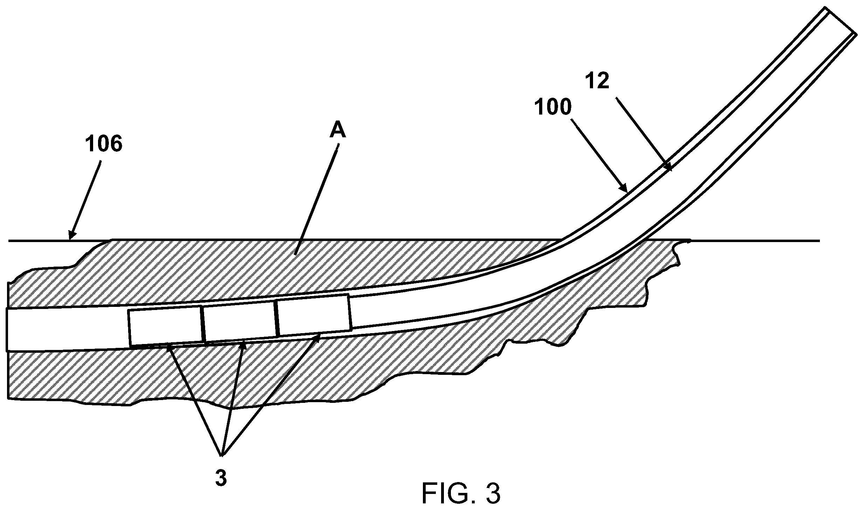

Fig. 3 shows a schematic detail of the system 20 near the sag bend 110. The support pipe 12 is mounted in the pipeline 100 and connected to a plurality of vibration units 3. As shown in Fig. 3, the predetermined length of the support pipe 12 has been chosen such that the plurality of vibration units 3 is mounted into the pipeline 100 just beyond the position where the pipeline 100 leaves the seabed 106. A portion of the seabed 106 is liquefied due to the vibration induced by the vibration units 3 transferred through the pipeline 100 too the seabed 106, resulting in a liquefied area A

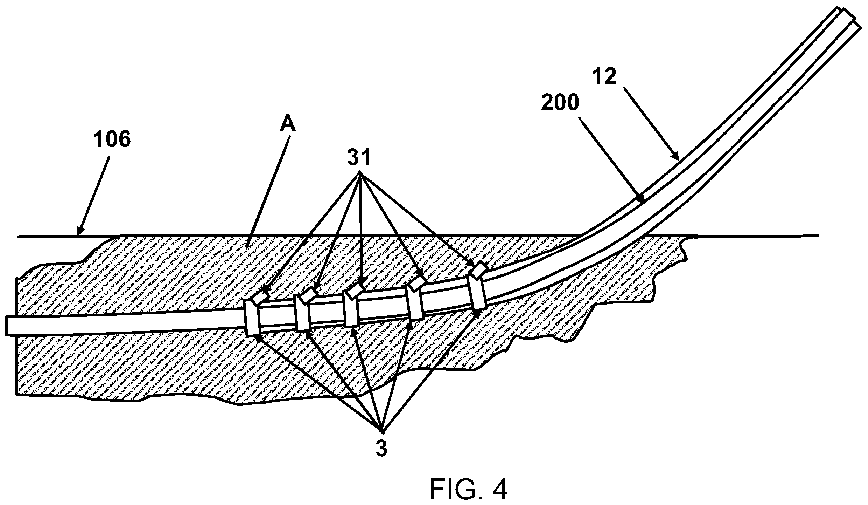

Fig. 4 shows a schematic detail of a system for the offshore de-burial of a cable 200. The support pipe 12 is mounted over the cable 200. A plurality of vibration units 3 is mounted onto the cable 200 and connected to the support pipe 12. As in Fig. 3, the plurality of vibration units 3 induce a vibration into the cable 200, which transfers the vibration to the seabed 106, resulting in a liquefied area A. As shown in Fig. 4, here each of the vibration units 3 further comprises a jetting system 31. The jetting system 31 is used to remove the soil nearby the cable 200 after and/or during liquifying to increase the recovery speed. It may be sufficient to remove or to loosen the soil a few centimeters above the pipeline or the cable, and, thus, relatively small and/or compact jetting systems can be used. Alternatively, the jetting system 31 can be provided elsewhere on the pipeline or cable or on the support pipe, separate from the vibration units.

Fig. 5 shows a schematic detail of the system 20 near the vessel 22. The pipeline 100 is received by the pulling unit 24. The pulling unit 24 is arranged to pull the pipeline 100 in a direction X. By pulling on the pipeline A part of the pipeline 100 which is pulled through the pulling unit 24 is received by the cutting unit 26. The cutting unit 26 is arranged to cut of a part of the pipeline 100. Furthermore, the cutting unit 26 in this example is arranged to cut the pipeline 100 along the direction X. The cutting unit 26 is arranged to cut the pipeline 100 while not cutting the support pipe 12 inserted inside the pipeline 100. The support pipe 12 extends through the cutting unit 26 and is received by the support block 28 downstream of the cutting unit 26. The support block 28 fixates an end 12a of the support pipe 12 and prevents the support pipe 12 from moving in the direction X. As such, when the pulling unit 24 pulls the pipeline 100, the support block 28 prevents the support pipe 12 to be pulled along with the pipeline 100. The vibration unit(s) (3) mounted to another end of the support pipe 12 therefore remain at their relative position near the sag bend 110. Furthermore, the support block 28 is arranged to allow cables 8 to extend through the support block 28, such that the cables 8 can be received by the drive unit 30 arranged downstream of the support block 28.

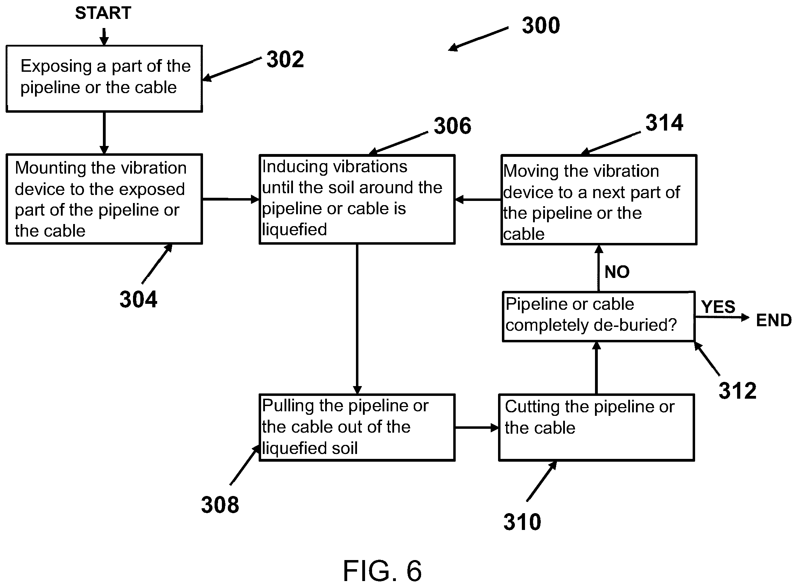

Fig. 6 shows a flowchart of a method 300 for de-burying a soil buried pipeline or a cable offshore. The method starts at block 302, by exposing a part of the pipeline or the cable from the soil in which it is buried. Exposing a part of the pipeline or the cable is done using a commonly known de-burying technique, for example by using drills, ploughs, or waterjet cutters. At block 304, after a part of the pipeline has been exposed, the vibration device is mounted to the exposed part of the pipeline. In case of a pipeline, the vibration device may be inserted into the pipeline such that a vibration unit is positioned near the sag bend of the pipeline. In case of a cable, the vibration device may be mounted around the cable such that a vibration unit is positioned near the sag bend of the cable. At block 306, the vibration unit is activated to induce vibration into the pipeline or the cable. The pipeline or the cable transfer the vibration into the surrounding soil, causing the soil to become (partly) liquefied. It is noted that the vibration unit may also be activated before block 306. For example, if the vibration device is to be mounted around a cable, the vibration device may already be activated during block 304. As such, the vibration induced in the cable during block 304 may already liquefy a small portion of the soil, allowing the vibration unit to be mounted around the cable below the seabed. At block 308, once a sufficient part of the soil is liquefied, the pipeline or the cable is pulled out of the liquefied soil. At optional block 310, the pipeline or cable can be cut. At block 312 it is decided whether it is feasible to continue de-burying the cable or the pipeline. For example, if the pipeline or cable is de-buried by a vessel, it can occur that the loading capacity of the vessel is reached. The method 300 can then be ended to allow the vessel to transport the de-buried pipeline or cable to a point for storage or further processing. The pipeline or cable may also be completely de-buried, thus ending the method 300. If the decision at block 312 is negative, the method 300 continues. At block 314, the vibration unit is moved to a next part of the pipeline or the cable. The method 300 then restarts at block 306, continually iterating the cycle of blocks 314, 306, 308, 310, and 312 until one of the criteria for ending the method 300 is met.

The method 300 is discussed by means of different blocks. It shall however be understood that many of these blocks can be executed simultaneously. Especially blocks 306, 308, 310 and 314 can all be performed simultaneously.

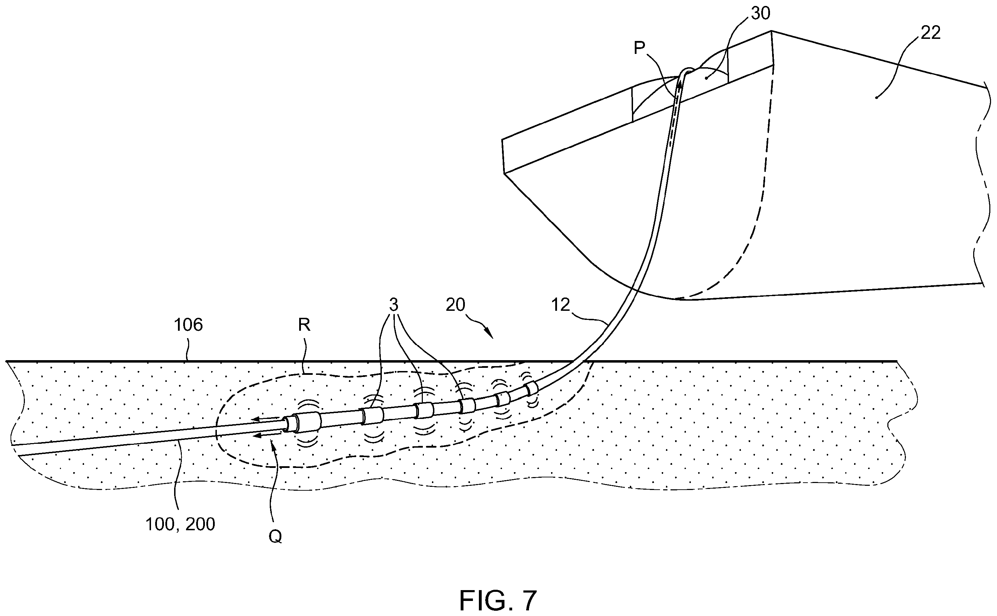

Figure 7 shows an arrangement of a vessel 22 with the system 20 coupled to the pipeline 100 or cable 200, that is, in this figure, still partially buried in the soil 106. Here, the system 20 comprises a support pipe 12 that bridges the distance between the buried pipeline/cable 100/200 and the vessel 22. In this figure, it is shown that the support pipe 12 is around the pipeline/cable, but as mentioned elsewhere in this disclosure, the support pipe 12 may also be engaged inside the pipeline, less likely inside a cable. The vessel 22 is provided with a curved structure 30 over which the support pipe 12 enters the vessel 22. The cable is being pulled in through the support pipe 12, shown by the dashed arrow P, while the support pipe 12 moves over the cable/pipeline in direction of the arrows Q. The support pipe 12 is here provided with six vibration units 3 spaced apart from each other in axial direction of the support pipe 12. The vibration units 3 induce vibrations in transverse direction to weaken the soil around the support pipe 12. A single vibration unit 3 may have a reach of several meters in axial direction towards both sides, upstream and downstream, along the pipeline or cable, allowing a significant length of soil along the pipeline or cable to be weakened or even liquefied. Line R may give an indication of the part of the soil that can be liquefied by the vibration units 3.

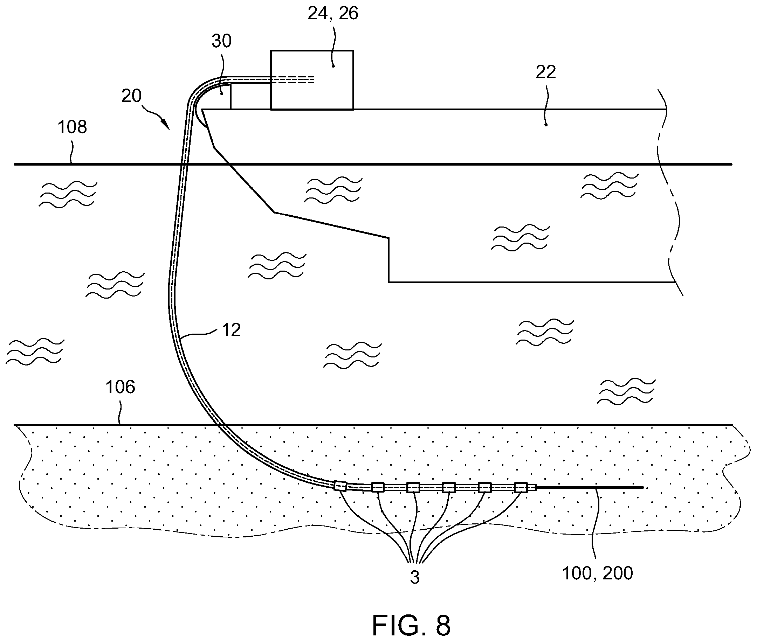

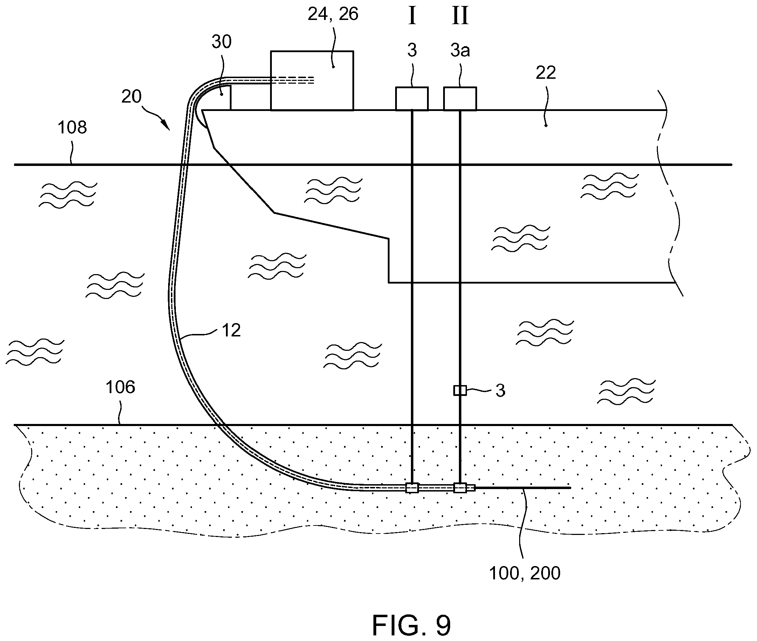

Figure 8 shows an arrangement of the system 20, with a support pipe 12 around the pipeline or cable 100, 200, with the pipeline or cable in a C-configuration. With such a C-configuration, the pipeline or cable to be removed is underneath the vessel 22. Here, the vibration units 3 are mounted to the support pip 12. However, in such a C-configuration, it becomes possible to mount the vibration unit 3 on deck of the vessel 22, as shown in position I of Fig. 9. Then the vibration unit 3 can be mounted on the vessel 22 and is connected to the support pipe 12 via a rigid structure that transmits the vibrations towards the support pipe to induce vibrations in transverse direction in the support pipe 12. In configuration II shown in Figure 9, the vibration unit 3 is under water, while a power source 3a thereof may be located on deck of the vessel 22. The vibration unit 3 may be powered via a power cable, however the connection between the vibration unit 3 and the support pipe 12 is preferably sufficiently rigid to transmit the vibrations and to induce the vibrations in transverse direction into the support pipe, in particular to also transmit the pressure component of the vibrations.

For the purpose of clarity and a concise description, features are described herein as part of the same or separate embodiments, however, it will be appreciated that the scope of the invention may include embodiments having combinations of all or some of the features described. It may be understood that the embodiments shown have the same or similar components, apart from where they are described as being different. The mere fact that certain measures are recited in mutually different claims does not indicate that a combination of these measures cannot be used to an advantage. Many variants will be apparent to the person skilled in the art. Such variants are understood to be comprised within the scope of the invention defined in the following claims.

## Claims

1. Vibration device (1) for offshore de-burial of a pipeline (100) or a cable (200), wherein the vibration device(1) has a contact surface (10) for being in contact with a wall of the pipeline (100) or the cable (200), wherein the vibration device (1) comprises at least one vibration unit (3) arranged to induce vibration to weaken soil around the pipeline (100) or the cable (200),
**characterized in that** the at least one vibration unit (3) is arranged to induce vibration in a direction transversely to the contact surface (10) to weaken soil around the pipeline (100) or the cable (200).

2. Vibration device according to claim 1, wherein the contact surface (10) is a convex contact surface or a concave contact surface.

3. Vibration device according claim 1 or claim 2, wherein the contact surface (10) is arranged to contact an outer wall of the pipeline(100) or the cable (200), or to contact an inner wall (102) of the pipeline (100).

4. Vibration device according to any of the preceding claims, wherein the contact surface (10) is arranged to be in contact with a wall of the pipeline (100) or the cable (200) over the entire circumference of the wall of the pipeline(100) or the cable (200).

5. Vibration device according to any of the preceding claims, wherein the vibration unit (3) comprises a casing (2), wherein the casing (2) is arranged to transfer the vibration to the contact surface (10).

6. Vibration device according to claim 5, wherein the casing (2) is provided with the contact surface (10).

7. Vibration device according to claim 5 or 6, wherein the at least one vibration unit (3) comprises a vibration source (4) to induce the vibration.

8. Vibration device according to claim 7, wherein the vibration source (4) of the at least one vibration unit (3) is arranged inside the casing (2) of the at least one vibration unit (3).

9. Vibration device according to claim 7 or 8, wherein the vibration source (4) comprises at least one eccentric mass for inducing vibrations.

10. Vibration device according to claim 7 or 8, wherein the vibration source (4) comprises at least one hydraulic cylinder and/or pneumatic cylinder for inducing vibrations.

11. Vibration device according to any of the preceding claims, wherein the contact surface (10) comprises a layer of lubrication and/or a low friction material and/or rollers.

12. Vibration device according to any of the preceding claims for offshore de-burial of a pipeline or a cable, wherein the vibration device (1) comprises at least one vibration unit and a support pipe (12) that is configured to be mounted over the pipeline (100) or cable (200) or inside the pipeline (100), wherein the at least one vibration unit (3) is arranged to induce vibrations in a direction transversely to a wall of the support pipe (12) to weaken the soil around the support pipe (12) or the pipeline (100) or the cable (200).

13. Vibration device according to claim 12, wherein the support pipe (12) has a support pipe end (12a) arranged to be connected to the at least one vibration unit (3).

14. Vibration device according to claim 12 or 13, wherein the at least one vibration unit (3) is integrated in a wall of the support pipe (12) or is mounted to a wall of the support pipe (12).

15. Vibration device according to any of the claims 12 - 14, wherein the support pipe (12) has a predetermined length and preferably extends from a position at or near a sea bed (106) in which the pipeline (100) or cable (200) is buried to a vessel (22) supporting the de-burial.

16. Vibration device according to any of the claims 1-15, further comprising a jetting system (31) arranged to emit a jet of water to loosen the soil around the pipeline (100) or cable (200).

17. Vibration device according to any of the preceding claims, wherein the vibration device comprises a plurality of vibration units.

18. System (20) for offshore de-burial of a pipeline (100) or a cable (200), comprising a vibration device (1) according to any of the preceding claims to weaken a soil in which the pipeline (100) or the cable (200) is buried and further comprising a pulling unit (24) arranged to pull the pipeline (100) or the cable (200) at least partially out of the weakened soil, wherein the vibration unit (3) is at a distance from the pulling unit (24).

19. System according to claim 18, further comprising a cutting unit (26) to cut a part of the pipeline (100) or the cable (200) that is pulled out of the soil.

20. System according to claim 19, wherein the cutting unit (26) comprises a cutting edge to cut a part of the pipeline (100) or the cable (200) in longitudinal direction thereof.

21. System according to claim 19 or 20, wherein the cutting unit (26) is arranged downstream of the pulling unit (24).

22. System according to claim 19, 20 or 21, further comprising a frame (32), wherein the frame (32) is configured to receive at least one of a pulling unit (24) and a cutting unit (26).

23. System according to claim 22, wherein the frame (32) is arranged to be mounted on a deck of a vessel (22).

24. System according to any of the claims 18-23, wherein the contact surface (10) of the vibration unit (3) is arranged to engage an entire circumference of a wall of the pipeline (100) or the cable (200) along a predetermined axial length of the wall of the pipeline (100) or the cable (200).

25. System according to any of the claims 18-24, wherein the vibration unit (3) is configured to be mounted to an outer side of the pipeline (100) of the cable (200), wherein a contact surface (10) of the vibration unit (3) is arranged to engage an outer wall of the pipeline (100) or the cable (200).

26. System according to any of the claims 18-25, wherein the vibration unit (3) is configured to be mounted inside of the pipeline (100), wherein a contact surface (10) of the vibration unit (3) is arranged to engage an inner wall (102) of the pipeline.

27. System according to any of the claims 18-26, wherein the vibration unit (3) is arranged to be mounted to the pipeline (100) or the cable (200) near or at a vessel (22).

28. System according to any of the claims 18-27, wherein the pulling unit (24) is configured for mounting on a vessel (22).

29. System according to claim 28, wherein the support pipe (12) is arranged between the vibration unit (3) and the pulling unit (24) to maintain the distance between the vibration unit (3) and the pulling unit (24) during operation.

30. System according to claim 29, wherein the support pipe (12) of the vibration device (1) is arranged to extend between the vessel (22) and the vibration unit (3) mounted to the pipeline (100) or the cable (200).

31. Arrangement of a system (20) according to any of claims 18-30 and a soil buried pipeline (100) or cable (200), and a vessel (22), wherein the vibration device (1) is mounted to the pipeline (100) or the cable (200), and the pulling unit (24) and/or the cutting unit (26) are mounted to the vessel (22).

32. Arrangement of claim 31, wherein the vibration device (1) is mounted to the pipeline (100) or the cable (200) near or at a position where the pipeline (100) or the cable (200) leaves the soil.

33. Arrangement of claim 31, wherein the vibration device (1) is mounted to an end of the pipeline (100) or cable (200) at the vessel (22).

34. Method (300) for de-burying a soil buried pipeline (100) or a cable (200) offshore, the method comprising:
a) exposing a part of the pipeline (100) or the cable (200) from the soil in which it is buried;
b) mounting the vibration device (1) of the de-burial system (20) according to any of claims 18 - 30 to a part of the pipeline (100) or the cable (200);
c) inducing vibrations in transverse direction of the pipeline (100) or the cable (200) to the pipeline (100) or the cable (200) respectively until the soil around the pipeline (100) or the cable (200) is liquefied;
d) pulling the pipeline (100) or the cable (200) through the liquefied soil;
e) moving the vibration device (1) to a next part of the pipeline (100) or the cable (200) and re-iterate steps c) - d).

35. Method according to claim 34, wherein step d) and step e) are performed simultaneously.

36. Method according to claim 34 or 35, further comprising a step of cutting a part of the pipeline (100) or the cable (200) which is pulled from the liquefied soil, wherein the step of cutting is performed after step d) or after step e).

37. Method according to any of the claims 34-36, wherein the vibration unit (3) of the vibration device (1) is mounted below a water line to the pipeline (100) or the cable (200) at or near the position where the pipeline (100) or the cable (200) leaves the soil.

38. Method according to claim 37, wherein the support pipe (12) of the vibration device (1) is mounted between the vibration unit (3) below the water line and the pulling unit (24) on a vessel (22) such that the distance between the vibration unit (3) and the pulling unit (24) is kept constant during de-burying.

## Patentansprüche

1. Vibrationsvorrichtung (1) zur Offshore-Ausgrabung einer Rohrleitung (100) oder eines Kabels (200), wobei die Vibrationsvorrichtung (1) eine Kontaktfläche (10) aufweist, um mit einer Wand der Rohrleitung (100) oder des Kabels (200) in Kontakt zu sein, wobei die Vibrationsvorrichtung (1) mindestens eine Vibrationseinheit (3) umfasst, die so angeordnet ist, dass sie eine Vibration hervorzuruft, um den Boden um die Rohrleitung (100) oder das Kabel (200) herum zu schwächen,
**dadurch gekennzeichnet, dass** die mindestens eine Vibrationseinheit (3) so angeordnet ist, dass sie Vibrationen in einer Richtung quer zur Kontaktfläche (10) hervorruft, um den Boden um die Rohrleitung (100) oder das Kabel (200) herum zu schwächen.

2. Vibrationsvorrichtung nach Anspruch 1, wobei die Kontaktfläche (10) eine konvexe Kontaktfläche oder eine konkave Kontaktfläche ist.

3. Vibrationsvorrichtung nach Anspruch 1 oder 2, wobei die Kontaktfläche (10) so angeordnet ist, dass sie eine Außenwand der Rohrleitung (100) oder des Kabels (200) oder eine Innenwand (102) der Rohrleitung (100) berührt.

4. Vibrationsvorrichtung nach einem der vorhergehenden Ansprüche, wobei die Kontaktfläche (10) so angeordnet ist, dass sie über den gesamten Umfang der Wand der Rohrleitung (100) oder des Kabels (200) in Kontakt mit einer Wand der Rohrleitung (100) oder des Kabels (200) steht.

5. Vibrationsvorrichtung nach einem der vorhergehenden Ansprüche, wobei die Vibrationseinheit (3) ein Gehäuse (2) umfasst, wobei das Gehäuse (2) so angeordnet ist, dass es die Vibration auf die Kontaktfläche (10) überträgt.

6. Vibrationsvorrichtung nach Anspruch 5, wobei das Gehäuse (2) mit der Kontaktfläche (10) versehen ist.

7. Vibrationsvorrichtung nach Anspruch 5 oder 6, wobei die mindestens eine Vibrationseinheit (3) eine Vibrationsquelle (4) zum Hervorrufen der Vibration umfasst.

8. Vibrationsvorrichtung nach Anspruch 7, wobei die Vibrationsquelle (4) der mindestens einen Vibrationseinheit (3) innerhalb des Gehäuses (2) der mindestens einen Vibrationseinheit (3) angeordnet ist.

9. Vibrationsvorrichtung nach Anspruch 7 oder 8, wobei die Vibrationsquelle (4) mindestens eine exzentrische Masse zum Hervorrufen von Vibrationen aufweist.

10. Vibrationsvorrichtung nach Anspruch 7 oder 8, wobei die Vibrationsquelle (4) mindestens einen Hydraulikzylinder und/oder Pneumatikzylinder zum Hervorrufen von Vibrationen umfasst.

11. Vibrationsvorrichtung nach einem der vorhergehenden Ansprüche, wobei die Kontaktfläche (10) eine Schmierschicht und/oder ein reibungsarmes Material und/oder Rollen aufweist.

12. Vibrationsvorrichtung nach einem der vorhergehenden Ansprüche zur Offshore-Ausgrabung einer Rohrleitung oder eines Kabels, wobei die Vibrationsvorrichtung (1) mindestens eine Vibrationseinheit und ein Stützrohr (12) umfasst, das so konfiguriert ist, dass es über der Rohrleitung (100) oder dem Kabel (200) oder innerhalb der Rohrleitung (100) angebracht werden kann, wobei die mindestens eine Vibrationseinheit (3) so angeordnet ist, dass sie Vibrationen in einer Richtung quer zu einer Wand des Stützrohrs (12) hervorruft, um den Boden um das Stützrohr (12) oder die Rohrleitung (100) oder das Kabel (200) herum zu schwächen.

13. Vibrationsvorrichtung nach Anspruch 12, wobei das Stützrohr (12) ein Stützrohrende (12a) aufweist, das so angeordnet ist, dass es mit der mindestens einen Vibrationseinheit (3) verbunden werden kann.

14. Vibrationsvorrichtung nach Anspruch 12 oder 13, wobei die mindestens eine Vibrationseinheit (3) in eine Wand des Stützrohrs (12) integriert oder an einer Wand des Stützrohr (12) angebracht ist.

15. Vibrationsvorrichtung nach einem der Ansprüche 12 bis 14, wobei das Stützrohr (12) eine vorbestimmte Länge aufweist und sich vorzugsweise von einer Position am oder in der Nähe des Meeresbodens (106), in dem die Rohrleitung (100) oder das Kabel (200) vergraben ist, zu einem Schiff (22) erstreckt, das die Ausgrabung unterstützt.

16. Vibrationsvorrichtung nach einem der Ansprüche 1 bis 15, die ferner ein Strahlsystem (31) umfasst, das so angeordnet ist, dass es einen Wasserstrahl aussendet, um den Boden um die Rohrleitung (100) oder das Kabel (200) herum zu lockern.

17. Vibrationsvorrichtung nach einem der vorhergehenden Ansprüche, wobei die Vibrationsvorrichtung eine Vielzahl von Vibrationseinheiten umfasst.

18. System (20) zur Offshore-Ausgrabung einer Rohrleitung (100) oder eines Kabels (200), das eine Vibrationsvorrichtung (1) nach einem der vorhergehenden Ansprüche umfasst, um einen Boden zu schwächen, in dem die Rohrleitung (100) oder das Kabel (200) vergraben ist, und das ferner eine Zugeinheit (24) umfasst, die so angeordnet ist, dass sie die Rohrleitung (100) oder das Kabel (200) zumindest teilweise aus dem geschwächten Boden herauszieht, wobei die Vibrationseinheit (3) von der Zugeinheit (24) beabstandet ist.

19. System nach Anspruch 18, das ferner eine Schneideinheit (26) umfasst, um einen Teil der Rohrleitung (100) oder des Kabels (200), der aus dem Boden gezogen wird, zu schneiden.

20. System nach Anspruch 19, wobei die Schneideinheit (26) eine Schneidkante umfasst, um einen Teil der Rohrleitung (100) oder des Kabels (200) in deren Längsrichtung zu schneiden.

21. System nach Anspruch 19 oder 20, wobei die Schneideinheit (26) stromabwärts der Zugeinheit (24) angeordnet ist.

22. System nach Anspruch 19, 20 oder 21, das ferner einen Rahmen (32) umfasst, wobei der Rahmen (32) so konfiguriert ist, dass er mindestens eine Zugeinheit (24) oder eine Schneideinheit (26) aufnimmt.

23. System nach Anspruch 22, wobei der Rahmen (32) so angeordnet ist, dass er auf einem Deck eines Schiffes (22) angebracht werden kann.

24. System nach einem der Ansprüche 18 bis 23, wobei die Kontaktfläche (10) der Vibrationseinheit (3) so angeordnet ist, dass sie an einem gesamten Umfang einer Wand der Rohrleitung (100) oder des Kabels (200) entlang einer vorgegebenen axialen Länge der Wand der Rohrleitung (100) oder des Kabels (200) in Eingriff kommt.

25. System nach einem der Ansprüche 18 bis 24, wobei die Vibrationseinheit (3) so konfiguriert ist, dass sie an einer Außenseite der Rohrleitung (100) oder des Kabels (200) angebracht werden kann, wobei eine Kontaktfläche (10) der Vibrationseinheit (3) so angeordnet ist, dass sie mit einer Außenwand der Rohrleitung (100) oder des Kabels (200) in Eingriff kommt.

26. System nach einem der Ansprüche 18 bis 25, wobei die Vibrationseinheit (3) so konfiguriert ist, dass sie im Inneren der Rohrleitung (100) angebracht wird, wobei eine Kontaktfläche (10) der Vibrationseinheit (3) so angeordnet ist, dass sie mit einer Innenwand (102) der Rohrleitung in Eingriff kommt.

27. System nach einem der Ansprüche 18 bis 26, wobei die Vibrationseinheit (3) so angeordnet ist, dass sie an der Rohrleitung (100) oder dem Kabel (200) in der Nähe oder an einem Schiff (22) angebracht werden kann.

28. System nach einem der Ansprüche 18 bis 27, wobei die Zugeinheit (24) zur Anbringung an einem Schiff (22) ausgebildet ist.

29. System nach Anspruch 28, wobei das Stützrohr (12) zwischen der Vibrationseinheit (3) und der Zugeinheit (24) angeordnet ist, um den Abstand zwischen der Vibrationseinheit (3) und der Zugeinheit (24) während des Betriebs beizubehalten.

30. System nach Anspruch 29, wobei das Stützrohr (12) der Vibrationsvorrichtung (1) so angeordnet ist, dass es sich zwischen dem Schiff (22) und der an der Rohrleitung (100) oder dem Kabel (200) angebrachten Vibrationseinheit (3) erstreckt.

31. Anordnung eines Systems (20) nach einem der Ansprüche 18 bis 30 und einer erdverlegten Rohrleitung (100) oder einem erdverlegten Kabel (200) und einem Schiff (22), wobei die Vibrationsvorrichtung (1) an der Rohrleitung (100) oder dem Kabel (200) und die Zugeinheit (24) und/oder die Schneideinheit (26) an dem Schiff (22) angebracht sind.

32. Anordnung nach Anspruch 31, wobei die Vibrationsvorrichtung (1) an der Rohrleitung (100) oder dem Kabel (200) in der Nähe oder an einer Stelle angebracht ist, an der die Rohrleitung (100) oder das Kabel (200) den Boden verlässt.

33. Anordnung nach Anspruch 31, wobei die Vibrationsvorrichtung (1) an einem Ende der Rohrleitung (100) oder des Kabels (200) am Schiff (22) angebracht ist.

34. Verfahren (300) zum Ausgraben einer erdverlegten Offshore-Rohrleitung (100) oder eines erdverlegten Offshore-Kabels (200), wobei das Verfahren Folgendes umfasst:
a) Freilegen eines Teils der Rohrleitung (100) oder des Kabels (200) aus dem Boden, in dem es vergraben ist;
b) Anbringen der Vibrationsvorrichtung (1) des Ausgrabungssystems (20) nach einem der Ansprüche 18 bis 30 an einem Teil der Rohrleitung (100) oder des Kabels (200);
c) Hervorrufen von Vibrationen in Querrichtung der Rohrleitung (100) bzw. des Kabels (200) auf die Rohrleitung (100) bzw. das Kabel (200), bis der Boden um die Rohrleitung (100) bzw. das Kabel (200) herum verflüssigt ist;
d) Ziehen der Rohrleitung (100) oder des Kabels (200) durch den verflüssigten Boden;
e) Bewegen der Vibrationsvorrichtung (1) zu einem nächsten Teil der Rohrleitung (100) oder des Kabels (200) und Wiederholung der Schritte c) - d).

35. Verfahren nach Anspruch 34, wobei Schritt d) und Schritt e) gleichzeitig durchgeführt werden.

36. Verfahren nach Anspruch 34 oder 35, das ferner einen Schritt des Schneidens eines Teils der Rohrleitung (100) oder des Kabels (200) umfasst, der aus dem verflüssigten Boden gezogen wird, wobei der Schritt des Schneidens nach Schritt d) oder nach Schritt e) durchgeführt wird.

37. Verfahren nach einem der Ansprüche 34 bis 36, wobei die Vibrationseinheit (3) der Vibrationsvorrichtung (1) unterhalb einer Wasserlinie an der Rohrleitung (100) oder dem Kabel (200) an oder in der Nähe der Stelle angebracht wird, an der die Rohrleitung (100) oder das Kabel (200) den Boden verlässt.

38. Verfahren nach Anspruch 37, wobei das Stützrohr (12) der Vibrationsvorrichtung (1) zwischen der Vibrationseinheit (3) unterhalb der Wasserlinie und der Zugeinheit (24) auf einem Schiff (22) so angebracht wird, dass der Abstand zwischen der Vibrationseinheit (3) und der Zugeinheit (24) während des Ausgrabens konstant gehalten wird.

## Revendications

1. Dispositif de vibration (1) pour le dégagement en mer d'un pipeline (100) ou d'un câble (200) enfoui, dans lequel le dispositif de vibration (1) présente une surface de contact (10) destinée à être en contact avec une paroi du pipeline (100) ou du câble (200), dans lequel le dispositif de vibration (1) comprend au moins une unité de vibration (3) agencée pour induire des vibrations afin d'affaiblir le sol autour du pipeline (100) ou du câble (200),
**caractérisé en ce que** la ou les unités de vibration (3) sont agencées pour induire des vibrations dans une direction transversale à la surface de contact (10) afin d'affaiblir le sol autour du pipeline (100) ou du câble (200).

2. Dispositif de vibration selon la revendication 1, dans lequel la surface de contact (10) est une surface de contact convexe ou une surface de contact concave.

3. Dispositif de vibration selon la revendication 1 ou la revendication 2, dans lequel la surface de contact (10) est agencée pour entrer en contact avec une paroi extérieure du pipeline (100) ou du câble (200), ou pour entrer en contact avec une paroi intérieure (102) du pipeline (100).

4. Dispositif de vibration selon l'une quelconque des revendications précédentes, dans lequel la surface de contact (10) est agencée pour être en contact avec une paroi du pipeline (100) ou du câble (200) sur toute la circonférence de la paroi du pipeline (100) ou du câble (200).

5. Dispositif de vibration selon l'une quelconque des revendications précédentes, dans lequel l'unité de vibration (3) comprend un boîtier (2), dans lequel le boîtier (2) est agencé pour transférer la vibration à la surface de contact (10).

6. Dispositif de vibration selon la revendication 5, dans lequel le boîtier (2) est pourvu de la surface de contact (10).

7. Dispositif de vibration selon la revendication 5 ou 6, dans lequel la ou les unités de vibration (3) comprennent une source de vibration (4) pour induire la vibration.

8. Dispositif de vibration selon la revendication 7, dans lequel la source de vibration (4) de la ou des unités de vibration (3) est disposée à l'intérieur du boîtier (2) de l'au moins une unité de vibration (3).

9. Dispositif de vibration selon la revendication 7 ou 8, dans lequel la source de vibration (4) comprend au moins une masse excentrique pour induire des vibrations.

10. Dispositif de vibration selon la revendication 7 ou 8, dans lequel la source de vibration (4) comprend au moins un vérin hydraulique et/ou un vérin pneumatique pour induire des vibrations.

11. Dispositif de vibration selon l'une quelconque des revendications précédentes, dans lequel la surface de contact (10) comprend une couche de lubrification et/ou un matériau à faible frottement et/ou des rouleaux.

12. Dispositif de vibration selon l'une quelconque des revendications précédentes pour le dégagement en mer d'un pipeline ou d'un câble enfoui, dans lequel le dispositif de vibration (1) comprend au moins une unité de vibration et un tuyau de support (12) qui est configuré pour être monté sur le pipeline (100) ou le câble (200) ou à l'intérieur du pipeline (100), dans lequel l'au moins une unité de vibration (3) est agencée pour induire des vibrations dans une direction transversale à une paroi du tuyau de support (12) pour affaiblir le sol autour du tuyau de support (12) ou du pipeline (100) ou du câble (200).

13. Dispositif de vibration selon la revendication 12, dans lequel le tuyau de support (12) a une extrémité de tuyau de support (12a) agencée pour être reliée à l'au moins une unité de vibration (3).

14. Dispositif de vibration selon la revendication 12 ou 13, dans lequel l'au moins une unité de vibration (3) est intégrée dans une paroi du tuyau de support (12) ou est montée sur une paroi du tuyau de support (12).

15. Dispositif de vibration selon l'une quelconque des revendications 12 à 14, dans lequel le tuyau de support (12) a une longueur prédéterminée et s'étend de préférence depuis une position au niveau ou à proximité d'un fond marin (106) dans lequel le pipeline (100) ou le câble (200) est enfoui jusqu'à un navire (22) supportant le dégagement.

16. Dispositif de vibration selon l'une quelconque des revendications 1 à 15, comprenant en outre un système de projection (31) agencé pour émettre un jet d'eau pour ameublir le sol autour du pipeline (100) ou du câble (200).

17. Dispositif de vibration selon l'une quelconque des revendications précédentes, dans lequel le dispositif de vibration comprend une pluralité d'unités de vibration.

18. Système (20) de dégagement en mer d'un pipeline (100) ou d'un câble (200) enfoui, comprenant un dispositif de vibration (1) selon l'une quelconque des revendications précédentes pour affaiblir un sol dans lequel le pipeline (100) ou le câble (200) est enterré et comprenant en outre une unité de traction (24) agencée pour tirer le pipeline (100) ou le câble (200) au moins partiellement hors du sol affaibli, dans lequel l'unité de vibration (3) est à distance de l'unité de traction (24).

19. Système selon la revendication 18, comprenant en outre une unité de coupe (26) pour couper une partie du pipeline (100) ou du câble (200) qui est extrait du sol.

20. Système selon la revendication 19, dans lequel l'unité de coupe (26) comprend un bord de coupe pour couper une partie du pipeline (100) ou du câble (200) dans le sens longitudinal de celui-ci

21. Système selon la revendication 19 ou 20, dans lequel l'unité de coupe (26) est disposée en aval de l'unité de traction (24).

22. Système selon la revendication 19, 20 ou 21, comprenant en outre un cadre (32), dans lequel le cadre (32) est configuré pour recevoir au moins une parmi une unité de traction (24) et une unité de coupe (26).

23. Système selon la revendication 22, dans lequel le cadre (32) est conçu pour être monté sur le pont d'un navire (22).

24. Système selon l'une quelconque des revendications 18 à 23, dans lequel la surface de contact (10) de l'unité de vibration (3) est agencée pour engager une circonférence entière d'une paroi du pipeline (100) ou du câble (200) le long d'une longueur axiale prédéterminée de la paroi du pipeline (100) ou du câble (200).

25. Système selon l'une quelconque des revendications 18 à 24, dans lequel l'unité de vibration (3) est configurée pour être montée sur un côté extérieur du pipeline (100) du câble (200), dans lequel une surface de contact (10) de l'unité de vibration (3) est agencée pour engager une paroi extérieure du pipeline (100) ou du câble (200).

26. Système selon l'une quelconque des revendications 18 à 25, dans lequel l'unité de vibration (3) est configurée pour être montée à l'intérieur du pipeline (100), dans lequel une surface de contact (10) de l'unité de vibration (3) est agencée pour engager une paroi interne (102) du pipeline.

27. Système selon l'une quelconque des revendications 18 à 26, dans lequel l'unité de vibration (3) est agencée pour être montée sur le pipeline (100) ou le câble (200) à proximité ou au niveau d'un navire (22).

28. Système selon l'une quelconque des revendications 18 à 27, dans lequel l'unité de traction (24) est configurée pour être montée sur un navire (22).

29. Système selon la revendication 28, dans lequel le tuyau de support (12) est disposé entre l'unité de vibration (3) et l'unité de traction (24) pour maintenir la distance entre l'unité de vibration (3) et l'unité de traction (24) pendant le fonctionnement.

30. Système selon la revendication 29, dans lequel le tuyau de support (12) du dispositif de vibration (1) est agencé pour s'étendre entre le navire (22) et l'unité de vibration (3) montée sur le pipeline (100) ou le câble (200).

31. Dispositif d'un système (20) selon l'une quelconque des revendications 18 à 30 et d'un pipeline (100) ou d'un câble (200) enterré dans le sol, et d'un navire (22), dans lequel le dispositif de vibration (1) est monté sur le pipeline (100) ou le câble (200), et l'unité de traction (24) et/ou l'unité de coupe (26) sont montées sur le navire (22).

32. Agencement selon la revendication 31, dans lequel le dispositif de vibration (1) est monté sur le pipeline (100) ou le câble (200) à proximité ou à un endroit où le pipeline (100) ou le câble (200) quitte le sol.

33. Agencement selon la revendication 31, dans lequel le dispositif de vibration (1) est monté à une extrémité du pipeline (100) ou du câble (200) au niveau du navire (22).

34. Procédé (300) de dégagement d'un pipeline (100) ou d'un câble (200) enfoui dans le sol en mer, le procédé comprenant : a) l'exposition d'une partie du pipeline (100) ou du câble (200) du sol dans lequel il est enterré ; b) le montage du dispositif de vibration (1) du système de dégagement (20) selon l'une quelconque des revendications 18 à 30 sur une partie du pipeline (100) ou du câble (200) ;
c) induire des vibrations dans la direction transversale du pipeline (100) ou du câble (200) vers le pipeline (100) ou le câble (200) respectivement jusqu'à ce que le sol autour du pipeline (100) ou du câble (200) soit rendu liquide ; d) tirer le pipeline (100) ou le câble (200) à travers le sol rendu liquide ; e) déplacer le dispositif de vibration (1) vers une partie suivante du pipeline (100) ou du câble (200) et répéter les étapes c) - d).

35. Procédé selon la revendication 34, dans lequel l'étape d) et l'étape e) sont exécutées simultanément.

36. Procédé selon la revendication 34 ou 35, comprenant en outre une étape de coupe d'une partie du pipeline (100) ou du câble (200) qui est tiré du sol rendu liquide, dans lequel l'étape de coupe est effectuée après l'étape d) ou après l'étape e).

37. Procédé selon l'une quelconque des revendications 34 à 36, dans lequel l'unité de vibration (3) du dispositif de vibration (1) est montée sous la ligne de flottaison au pipeline (100) ou au câble (200) à l'endroit ou à proximité de l'endroit où le pipeline (100) ou le câble (200) quitte le sol.

38. Procédé selon la revendication 37, dans lequel le tuyau de support (12) du dispositif de vibration (1) est monté entre l'unité de vibration (3) en dessous de la ligne de flottaison et l'unité de traction (24) sur un navire (22) de telle sorte que la distance entre l'unité de vibration (3) et l'unité de traction (24) est maintenue constante pendant le dégagement.
